# DEMANDE DE BREVET EUROPEEN

(11) **EP 3 001 696 A2**
(43) Date de publication de la demande: **30.03.2016**
(21) Numéro de dépôt: 15186087.1
(22) Date de dépôt: 21.09.2015
(51) Int. Cl.: H04R 1/10, H04R 5/033

(54) **CASQUE AUDIO RECHARGEABLE SANS CONTACT**

(30) Priorité: 29.09.2014 FR 1459212
(71) Demandeur: Parrot, 75010 Paris (FR)
(72) Inventeur: MATHIEU, Jérôme, 75014 PARIS (FR); TEA, David, 77185 LOGNES (FR)
(74) Mandataire: Dupuis-Latour, Dominique

(57) **Abrégé**

Ce casque comprend deux écouteurs (10), chacun comprenant un coussinet souple (16) circumaural ou supra-aural généralement annulaire, monté sur une coque (14) recevant un transducteur (30). Le casque comprend une circuiterie électronique alimentée par une batterie, et un circuit de recharge de la batterie relié à au moins un bobinage (20) de recharge par couplage inductif. Le bobinage est logé dans un coussinet (16), et il est logé dans une région du coussinet (16) proche d'un plan limite extérieur, côté porteur, de l'enveloppe (16a, 16b) du coussinet, par exemple au voisinage d'une couture (C) entre deux parties (16a, 16b) d'une enveloppe du coussinet.

## Description

L'invention concerne les casques incorporant des circuits électroniques embarqués.

Il peut s'agir notamment de casques munis de circuits de filtrage et de traitement du signal (par exemple des circuits de réduction active du bruit ambiant) et/ou de circuits de réception pour une utilisation sans fil du casque, où ce dernier est couplé à un appareil tel qu'un lecteur MP3, radio, *smartphone,* etc. par une liaison de type *Bluetooth* (marque déposée du Bluetooth SIG) ou autre.

De tels casques embarquent typiquement une batterie qui doit être régulièrement rechargée.

On connait par ailleurs des systèmes de recharge dans fil pour des écouteurs, mais ils nécessitent une configuration très particulière.

Ainsi, le GB 1 592 468 A décrit un système de recharge pour casques de laboratoire de langues, utilisant un bobinage récepteur intégré à la coque de l'un des écouteurs de chaque casque. La recharge est effectuée en introduisant cet écouteur dans un compartiment spécial d'un meuble de rangement des casques. Ce compartiment incorpore un bobinage primaire, disposé de sorte que l'écouteur se trouve placé dans le rayon d'action du bobinage pour permettre la recharge sans fil du casque.

Le US 2013/0223640 A1 décrit un autre système de recharge sans fil, où le casque est suspendu par son arceau à une potence munie d'un bobinage central de recharge. L'un des écouteurs comporte un bobinage récepteur monté dans la coque de l'écouteur, mais du côté intérieur (c'est-à-dire du côté de la coque tourné vers l'oreille), de manière à se trouver orienté vers le bobinage central distant.

Ces dispositifs connus ne sont toutefois pas adaptés aux systèmes de recharge à très faible portée, par exemple ceux qui se conforment aux prescriptions du standard d'interfaçage "Qi" du *Wireless Power Consortium,* utilisé pour la recharge d'appareils tels que les *smartphones* ou consoles de jeu portables, où il suffit de poser l'appareil sur le plateau d'une base support adaptée, intégrant le système de recharge avec son bobinage émetteur monté sous le plateau.

Ce standard prévoit toutefois que la distance entre bobinages émetteur et récepteur soit typiquement d'au plus 5 mm, de préférence inférieure ou égale à 2,5 mm pour disposer d'un bon couplage inductif entre les deux bobinages, et donc d'un rendement satisfaisant de la transmission sans fil de l'énergie de recharge entre le plateau de la base support et l'appareil à recharger.

Dans le cas d'un *smartphone* ou d'une console de jeu, ces appareils présentent généralement une face plane, inutile en fonctionnement normal (généralement la face dorsale du boitier de l'appareil), contre laquelle pourra être plaqué, côté intérieur du boitier, le bobinage récepteur de l'appareil. La distance entre ce bobinage et le plateau de recharge correspond donc à peu près à l'épaisseur de la paroi du boitier de l'appareil, distance qui est très faible et assure donc un excellent couplage entre les deux bobinages.

En revanche, dans le cas d'un casque, un tel appareil ne comporte généralement pas de face plane inutilisée qui pourrait jouer le rôle de la face dorsale du *smartphone* ou de la console de jeu, sauf à donner cette configuration et ce rôle à l'une des faces externes de la coque d'un écouteur, ce qui ne serait pas satisfaisant sur le plan du style puisque cette face serait visible et même particulièrement apparente.

Tel est le problème que cherche à résoudre la présente invention.

Le but de l'invention est ainsi de proposer un casque doté d'un système de recharge sans fil compatible avec les standards des systèmes à très courte portée de type Qi ou analogue, standards qui imposent un écartement typique entre bobinages émetteur (de la base de recharge) et récepteur (de l'appareil à recharger, en l'espèce le casque) d'au plus 5 mm, de préférence inférieure ou égale à 2,5 mm.

D'autre part, un tel casque doit pouvoir être rechargé à partir de n'importe quelle base de recharge dès lors que celle-ci est conforme audit standard, c'est-à-dire que le casque de l'invention ne doit pas nécessiter de système spécifique pour sa recharge, à la différence des casques décrits par les GB 1 592 468 A et US 2013/0223640 A1 précités, qui ne peuvent être rechargés qu'à partir d'un meuble de rangement ou d'une potence support propres.

La recharge du casque doit en outre pouvoir être effectuée de façon simple et fiable par l'utilisateur sans manipulation contraignante et sans précaution particulière, c'est-à-dire qu'il doit lui suffire de poser le casque sur le plateau d'une base de recharge, sans autre geste particulier. L'invention propose à cet effet un casque audio du type général décrit par le GB 1 592 468 A précité, comprenant deux écouteurs et un élément de liaison entre les écouteurs. Chaque écouteur comprend une coque recevant un transducteur, et un coussinet souple circumaural ou supra-aural généralement annulaire. Le casque comprend une circuiterie électronique alimentée par une batterie, et un circuit de recharge de la batterie relié à au moins un bobinage de recharge par couplage inductif.

De façon caractéristique de l'invention, le bobinage est logé dans le coussinet de l'un au moins desdits écouteurs, dans une région située au voisinage de la surface libre, opposée à la coque, de ce coussinet, à proximité d'un plan limite extérieur, côté porteur, de l'enveloppe du coussinet, et le bobinage présente une déformabilité telle qu'elle n'altère essentiellement pas la déformabilité du coussinet.

Le casque inclut avantageusement mais optionnellement les caractéristiques additionnelles suivantes, considérées individuellement ou en toutes combinaisons techniquement compatibles :
- le bobinage est agencé dans la région du coussinet axialement et radialement adjacente à son ouverture aurale ;
- le bobinage est agencé au voisinage d'une couture entre deux parties d'une enveloppe du coussinet, ladite couture épousant sa forme généralement annulaire ;
- la surface libre de l'enveloppe du coussinet côté porteur est généralement plane ;
- la section transversale du bobinage est aplatie, avec un grand axe contenu dans le plan du bobinage.

On va maintenant décrire un exemple de mise en oeuvre de l'invention, en référence aux dessins annexés où les mêmes références désignent d'une figure à l'autre des éléments identiques ou fonctionnellement semblables.
La Figure 1 représente en perspective un casque audio selon l'invention mis en place sur la tête d'un utilisateur.
La Figure 2 est une vue en coupe transversale partielle de l'un des deux écouteurs du casque de la Figure 1.
La Figure 3 est une vue en coupe transversale d'un coussinet de l'écouteur de la Figure 2.
La Figure 4 est une vue en perspective d'un coussinet d'un casque selon l'invention, ayant une forme différente.
La Figure 5 est une vue en élévation de côté d'un casque audio selon l'invention reposant sur la surface d'un dispositif de charge sans fil.

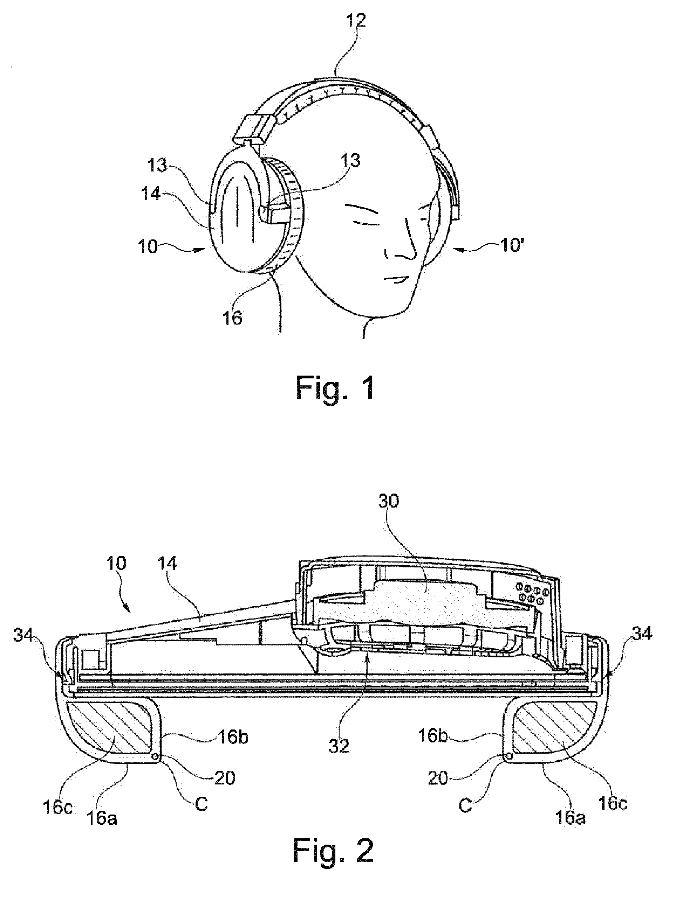

En référence aux dessins et en particulier à la Figure 1, on a représenté un casque audio placé sur la tête de son utilisateur.

Ce casque comporte, de manière en elle-même classique, deux écouteurs 10, 10' réunis par un arceau de maintien 12. L'arceau 12 est relié aux écouteurs par l'intermédiaire de liaisons pivotantes 13 permettant un bon ajustement des écouteurs sur la tête de l'utilisateur en s'adaptant à sa morphologie.

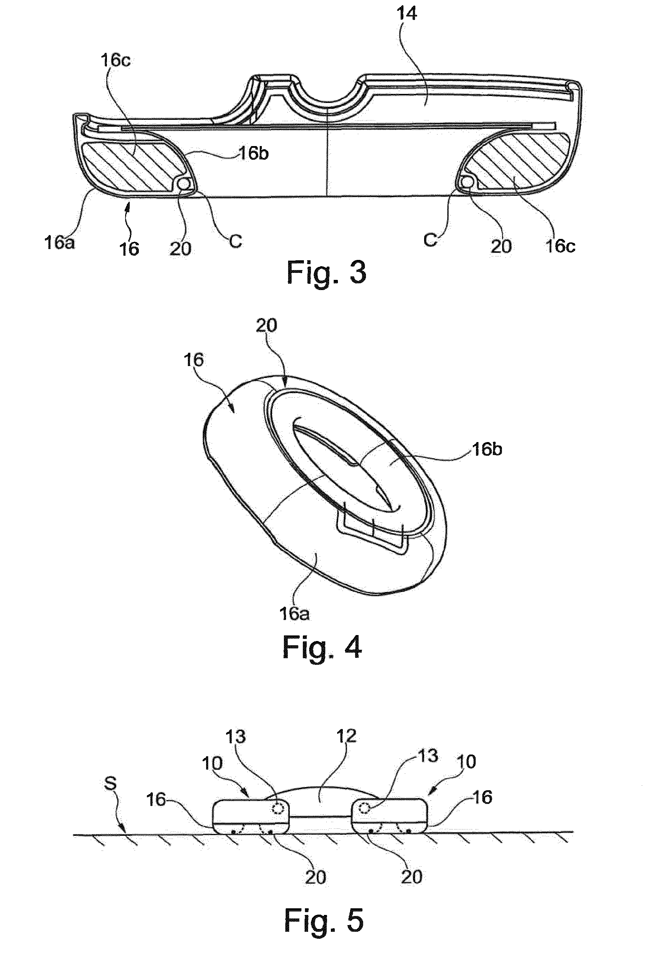

Chacun des écouteurs 10, 10' comprend une coque extérieure 14 venant s'appliquer sur le contour de l'oreille de l'utilisateur, avec interposition entre la coque 14 et la périphérie de l'oreille d'un coussinet souple 16 circumaural ou supra-aural, de contour généralement elliptique ou circulaire, destiné à assurer une étanchéité acoustique satisfaisante entre la région de l'oreille et l'environnement sonore extérieur. Le coussinet 16 comprend une enveloppe souple 16a, 16b, par exemple en similicuir ou autre matériau ayant des propriétés semblables de robustesse et de confort, et un garnissage souple 16c, par exemple en mousse ou en fibres, logé à l'intérieur de l'enveloppe 16a, 16b. Comme le montre la Figure 3, une partie du coussinet (la partie 16a) se prolonge axialement vers le côté de la coque 14 pour épouser latéralement une partie de celle-ci.

Sur la Figure 2, on a représenté le détail de l'un des écouteurs, avec la coque 14 et sa structure interne de support d'au moins un transducteur (ici un transducteur unique 30), ainsi que la structure 34 de fixation du coussinet 16, fixation réalisée de préférence par clipsage.

La coque 14 (ou la coque opposée) abrite également, de façon non illustrée mais connue en soi, une batterie rechargeable et des circuits électroniques destinés à assurer en particulier les fonctions suivantes :
- communication sans fil, par exemple selon le standard *Bluetooth* ou analogue, avec une station émettrice telle qu'un ordinateur, une tablette, etc. ;
- traitement des signaux audio appliqués aux transducteurs, notamment circuit d'annulation de bruit ambiant, correction de totalité, de présence, application d'effets, etc. ; et
- récupération de l'énergie électrique recueillie par un bobinage inductif que l'on va décrire dans la suite, et adaptation de niveau de tension pour réaliser la charge de la batterie.

Le casque audio comprend par ailleurs le cas échéant une interface de commande (pavé tactile, boutons, etc.), non illustrée, située sur la surface extérieure, opposée à son coussinet 16, de l'une des coques 14.

Selon l'invention, le casque audio est rechargeable sans contact, et comprend à cet effet au moins un bobinage de récupération de flux magnétique émis par un dispositif extérieur, relié aux circuits de récupération d'énergie et de charge.

Plus particulièrement, et comme illustré en particulier sur la Figure 5, le ou les bobinages sont disposés dans le casque de telle sorte que la charge de la batterie puisse s'effectuer alors que le casque repose sur une surface plane de recharge S, émettant de façon connue en soi un flux magnétique, avec ses deux coussinets 16 en contact avec ladite surface de recharge S.

A cet effet, et comme illustré sur les Figures 2 et 3, le bobinage, désigné par la référence 20 est placé dans la région extérieure du coussinet 16, c'est-à-dire au voisinage de sa surface libre, opposée à la coque.

Il est avantageux à cet égard que ladite surface libre du coussinet soit généralement plane, comme montré sur les Figures 2 et 3, de telle sorte que, lorsque le casque repose sur la surface de charge S avec ses coussinets 16 en contact avec ladite surface, la distance entre le bobinage 20 (ou chaque bobinage dans le cas où chaque écouteur est doté d'un bobinage) soit suffisamment petite pour assurer un couplage inductif satisfaisant entre les bobinages émettant le flux dans la plaque et le ou les bobinages récepteurs 16.

Typiquement, pour une recharge réalisée conformément aux prescriptions du standard d'interfaçage "Qi" du *Wireless Power Consortium,* cette distance est inférieure ou égale à 2,5 mm, ce qui est réalisable si l'on intègre le bobinage dans le coussinet 16 au voisinage d'une couture C entre une partie de coussinet 16a axialement et radialement extérieure, et une partie de coussinet 16b axialement et radialement intérieure.

Le placement du bobinage 20 au voisinage de cette couture C permet en effet de mettre en place le rembourrage 16c du coussinet, puis de placer le bobinage à l'endroit indiqué sur les Figures 2 et 3, puis de réaliser la couture C.

Pour ne pas altérer la souplesse et le confort du coussinet, le bobinage présente une section transversale et une souplesse compatibles avec ces exigences. À cet effet, le bobinage 20 est réalisé à l'aide d'un fil de cuivre de faible section, typiquement comprise entre environ 0,07 et 0,2 mm², et l'isolant entre spires est une résine ayant également des caractéristiques de souplesse adéquates. Le nombre de spires du bobinage, avec la gamme de sections de fil précitée, est typiquement compris entre environ 10 et 18 spires.

La section transversale du bobinage 20 peut par ailleurs être soit circulaire, comme illustré sur les Figures 2 et 3, soit aplatie, avec un grand axe de préférence contenu dans le plan du bobinage pour assurer une déformabilité la mieux adaptée à la préservation du confort. Les brins d'extrémité du bobinage 20 sont reliés au circuit de récupération d'énergie et de charge en passant soit du côté interne du coussinet 16, soit du côté externe.

Lorsque les deux écouteurs 10 du casque sont pourvus d'un bobinage 20, le dispositif de récupération d'énergie et de charge de la batterie, situé dans l'une des coques 14, est connecté au bobinage de l'écouteur opposé par des conducteurs appropriés passant par l'arceau 12.

Un autre avantage du placement du bobinage 20 dans le coussinet 16 réside en ce que la surface extérieure de la coque 14, notamment son interface de commande, et les circuits qu'elle abrite n'ont pas à être modifiés de façon contraignante pour recevoir le bobinage.

Un autre avantage encore est que la souplesse du coussinet 16, combinée au poids du casque, permet une bonne application de ce coussinet contre la surface de recharge, ce qui ne serait pas possible si le bobinage était placé du côté de la coque 14, généralement en matière plastique rigide.

La Figure 4 illustre une variante de réalisation du coussinet 16, avec une section de forme plus arrondie du côté de sa face libre destinée à l'appui contre la tête du porteur. Dans ce cas, le bobinage 20 est placé au voisinage du sommet de cette forme arrondie avec, ici encore, la recherche d'une distance la plus courte possible entre le bobinage et la surface de recharge.

La Figure 5 représente le casque 10 reposant contre la surface d'un dispositif de charge sans fil, de dimensions appropriées et dont les principes techniques sont connus de l'homme du métier.

On observe que grâce aux articulations 13 entre l'arceau 12 et les écouteurs 10, les deux bobinages 20 se placent bien à plat contre la surface de charge S, ce qui garantit un couplage inductif satisfaisant et une charge de la batterie d'autant plus rapide.

## Revendications

1. Casque audio, comprenant deux écouteurs (10) et un élément de liaison (12) entre les écouteurs,
chaque écouteur comprenant une coque (14) recevant un transducteur (30), et un coussinet souple (16) circumaural ou supra-aural généralement annulaire,
le casque comprenant une circuiterie électronique alimentée par une batterie, et un circuit de recharge de la batterie relié à au moins un bobinage (20) de recharge par couplage inductif,
**caractérisé en ce que** ledit bobinage (20) est logé dans le coussinet (16) de l'un au moins desdits écouteurs (10), dans une région située au voisinage de la surface libre, opposée à la coque, de ce coussinet, à proximité d'un plan limite extérieur, côté porteur, de l'enveloppe (16a, 16b) du coussinet,
et **en ce que** le bobinage (20) présente une déformabilité telle qu'elle n'altère essentiellement pas la déformabilité du coussinet (16).

2. Casque audio selon la revendication 1, **caractérisé en ce que** le bobinage (20) est agencé dans la région du coussinet (16) axialement et radialement adjacente à son ouverture auraie.

3. Casque audio selon la revendication 1, dans lequel le bobinage (20) est agencé au voisinage d'une couture (C) entre deux parties (16a, 16b) d'une enveloppe du coussinet, ladite couture épousant sa forme généralement annulaire.

4. Casque audio selon la revendication 1, dans lequel la surface libre de l'enveloppe (16a, 16b) du coussinet (16) côté porteur est généralement plane.

5. Casque audio selon la revendication 4, dans lequel la section transversale du bobinage (20) est aplatie, avec un grand axe contenu dans le plan du bobinage.
